# EUROPEAN PATENT SPECIFICATION

(11) **EP 3 569 887 B1**
(45) Date of publication and mention of the grant of the patent: **23.12.2020**
(21) Application number: 19170095.4
(22) Date of filing: 18.04.2019
(51) Int. Cl.: F16D 65/09, F16D 69/04, B60T 1/06

(54) **PAD FOR DISC BRAKES FOR RAILWAY VEHICLES**
BREMSBELAG FÜR SCHEIBENBREMSE FÜR SCHIENENFAHRZEUG
PLAQUETTE DE FREIN POUR FREIN A DISQUE DE VEHICULE FERROVIAIRE

(30) Priority: 14.05.2018 IT 201800005328
(43) Date of publication of application: 20.11.2019
(73) Proprietor: Cofren S.r.L., 83100 Avellino (IT)
(72) Inventor: DE SOCCIO, Vittorio, 82100 BENEVENTO (IT)
(74) Representative: Bosman, Cesare

(56) References cited:
- EP-A1- 1 679 452
- EP-A1- 2 730 798
- EP-A2- 2 320 106
- WO-A1-02/073059
- WO-A1-2017/115700
- WO-A1-2017/159465
- CN-B- 104 455 103
- DE-A1-102013 211 467
- DE-A1-102014 119 489
- DE-A1-102014 119 491
- DE-U1-202010 007 333

## Description

### CROSS-REFERENCE TO RELATED APPLICATIONS

This Patent application claims priority from Italian Patent Application No. 102018000005328 filed on May 14, 2018.

### TECHNICAL FIELD

The invention relates to a pad for disc brakes for railway vehicles.

### BACKGROUND OF THE INVENTION

As it is known, disc brakes are subjected to very significant stresses and, in order to obtain an ideal braking action, there has to be a good transmission of the braking force from the pad to the disc.

For a long time now manufacturers have been using pads that carry a plurality of small-sized friction elements, instead of one single large-sized friction element. According to one of the solutions adopted to this regard, each pad consist of a base plate, a plurality of support plates, which are fixed to the base plate, and a plurality of friction elements, which are fixed - either singularly or in pairs - on the respective support plates.

In order to ensure a correct cooling of the friction elements, a solution is that of inserting circular spacers between the support plates and the base plate. The presence of the circular spacers creates a gap between the support plates and the base plate, so as to encourage a cooling ventilation on the lower surface of the friction elements.

Each one of the circular spacers has a central hole which, in the assembled pad, is engaged by the rivet assigned to blocking the support plate on the base plate.

Examples of such solutions are known from the EP 2 320 106 A2 or from the WO 2017/159465 A1.

Even though the presence of the spacers ensures the desired cooling ventilation, it has however proved to lead to a premature damaging of the friction elements due to the irregularities formed on the disc upon which the friction elements themselves act.

Indeed, with use, sorts of grooves are necessarily created on the surface of the disc and, when the friction elements act upon the disc, a non-homogeneous pressure is exerted upon them. The spacers, acting like a sort of rear pin, amplify the damaging effects that can be caused by such non-homogeneous pressure. A solution could be that of increasing the diameter of the circular spacers, thus increasing the support surface of the friction elements, hence ensuring a greater preservation thereof given the non-homogeneous pressures acting upon the disc. On the other hand, an increase in the diameter of the circular spacers necessarily leads to a decrease in the gap space needed for an effective cooling ventilation.

Therefore, there is a strong need to have spacers available, which are capable of ensuring an improvement in terms of support of the friction elements, without jeopardizing the cooling ventilation.

The inventor of the invention offers a new type of spacers, which are capable of increasing the support of the friction elements, ensuring at the same time a high and effective effect of ventilation on the rear surface of the friction elements.

### SUMMARY OF THE INVENTION

The subject-matter of the invention is a pad for disc brakes for railway vehicles comprising a base plate, in which a plurality of fixing holes are obtained; a plurality of support plates, in each of which at least one fixing hole is obtained, which is designed to be engaged, together with a respective fixing hole obtained in said base plate, by a respective rivet so as to fix the respective support plate to said base plate; a plurality of friction elements, each fixed on a respective support plate; and a plurality of spacers, each mounted between said base plate and a respective support plate; in each one of said spacers there being obtained a locking hole engaged by a respective rivet designed to fix the support plate on the base plate; said pad being characterized in that each one of said spacers comprises a central portion, in which said locking hole engaged by said rivet is obtained, and a plurality of support arms radially extending from said central portion and arranged in contact with a respective support plate without being fixed thereto.

Each one of the support plate is fixed to said base plate by means of two rivets and between each one of the support plates and the base plate there are fitted two of said spacers.

Said support arms preferably have a free end arranged flush with an outer edge of the respective support plate to which they are coupled.

Each one of said spacers preferably has only two support arms radially extending from said central portion and aligned with one another.

### BRIEF DESCRIPTION OF THE DRAWINGS

The invention will be best understood upon perusal of the following description of two preferred embodiments, provided by way of mere explanatory, non-limiting examples, with reference to the accompanying drawings, wherein:
Figure 1 is a plan view, with transparent parts, of the pad according to the invention;
Figure 2 is a cross section along line II-II of the base plate of figure 1;
figure 3 is a plan view, with transparent parts, of a further embodiment of the pad according to the invention;
figure 4 is a cross section along line IV-IV of figure 3.

### DETAILED DESCRIPTION OF THE INVENTION

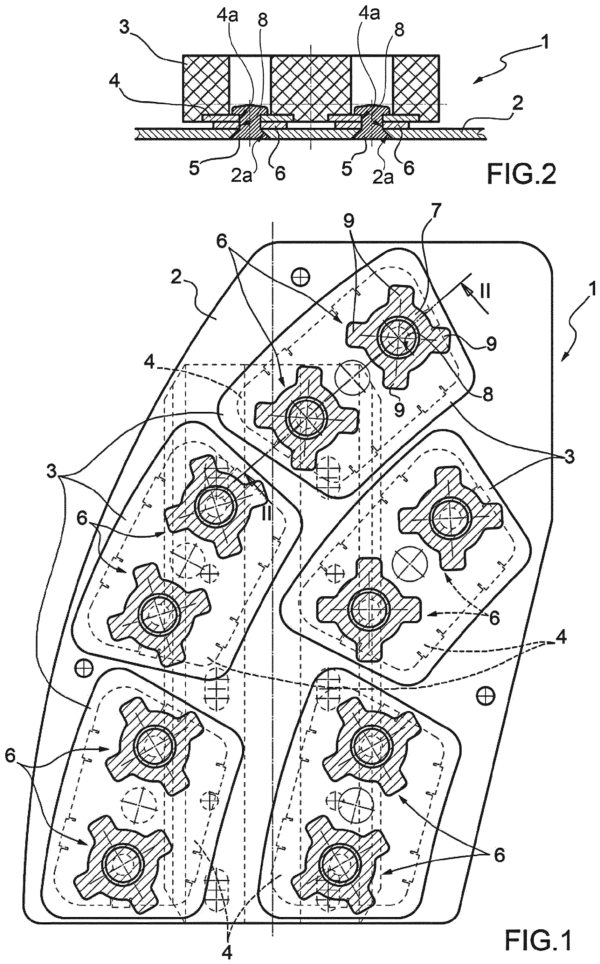

In figures 1 and 2, number 1 indicates, as a whole, a pad for disc brakes according to the invention.

The pad 1 comprises a base plate 2, in which a plurality of fixing holes 2a are made, five friction elements 3 with a substantially rectangular shape, each fixed to a respective support plate 4, in which two fixing holes 4a are obtained, and a plurality of rivets 5, which are responsible for the fixing of the support plates 4 to the base plate 2. In particular, each one of the support plates 4 is fixed to the base plate 2 by means of two rivets 5, each engaging both a fixing hole 4a thereof and one of the fixing holes 2a made in the base plate 2.

The pad 1 further comprises a plurality of spacers 6, each engaged by a respective rivet 5 and, hence, arranged between the base plate 2 and a respective support plate 4.

Each one of the spacers 6 comprises a central portion 7, in which a locking hole 8 is obtained, which, in use, is engaged by a respective rivet 5, and four arms 9 radially extending from the central portion 7 and arranged so as to form a cross. In figure 1, the above-mentioned portions are indicated with number references only for one spacer 6.

According to figure 2, the arms 9 fulfil a supporting function for the friction elements, thus countering the non-homogeneous stresses arising when the friction elements act upon the disc, which, with use, develops an irregular surface. In particular, each one of the arms 9 is arranged in contact with the support plate 4, without being fixed thereto. The absence of fixing between the arms 9 and the support plate 4 has proved to be capable of helping ensure a more effective support of the friction elements, avoiding the breaking or deformation thereof during their operation. On the contrary, if the arms 9 are fixed to the support plate, they create a further constraint between the spacer and the support plate, with obvious consequences in terms of stress and deformation.

The arms, besides ensuring a greater support for the relative friction element and, hence, avoiding a premature braking or deformation thereof, also offer the advantage of offering a more effective cooling ventilation of the friction elements compared to the circular spacers of the prior art.

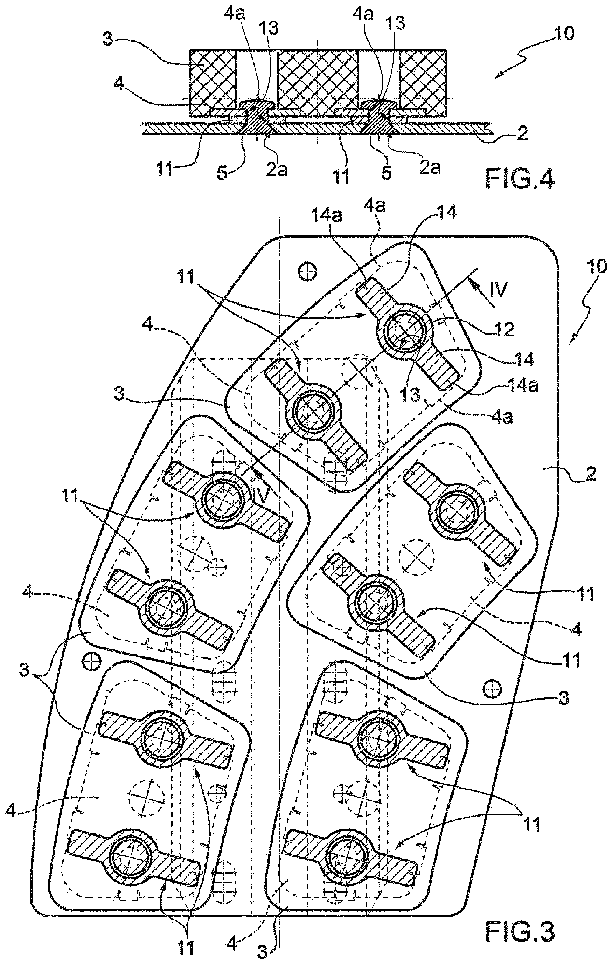

In figures 3 and 4, number 10 indicates, as a whole, a pad for disc brakes according to the invention.

The parts 10 of the pad that are the same as those of the pad 1 are indicated with the same numbers and will not be described again.

The pad 10 comprises a plurality of spacers 11, each engaged by a respective rivet 5 and, hence, arranged between the base plate 2 and a respective support plate 4.

Each one of the spacers 11 comprises a central portion 12, in which a locking hole 13 is obtained, which, in use, is engaged by a respective rivet 5, and two arms 14 radially extending from the central portion 12 and aligned with one another. As already mentioned above for the embodiment shown in figures 1 and 2, in this embodiment - as well - the two arms 14 are arranged in contact with the support plate 4, without being fixed thereto.

In figure 3, the above-mentioned portions are indicated with number references only for one spacer 11.

According to figure 3, each one of the arms 14 has an end 14a of its arranged flush with an edge 4a of the respective support plate 4. This solution ensures a greater support of the friction element.

Furthermore, the presence of two sole arms ensures a greater ventilation in the part under the friction element. Indeed, the spacer 10 has a smaller quantity of material, despite crating the same gap.

According to figure 3, the friction elements 3 have an oblong shape having two main sides 3a, which are parallel to one another and have a curved shape. Each one of the friction elements 3 is fixed to the base plate 2 in such a way that the curvatures of the main sides 3a form an angle that is substantially equal to 0° with respective concentric circumferences of a disc to which the pad 1 is applied. The two arms 14 are arranged substantially perpendicularly to the main sides 3a of the respective friction element 3. This position of the arms 14 further ensures the effective support action needed to avoid a braking or deformation of the friction elements.

Owing to the above, the pad according to the invention comprises spacers which are capable of ensuring, compared to the spacers of the prior art, both a greater support of the friction elements, thus avoiding a premature breaking or distortion thereof, and - at the same time - a greater ventilation effect on the rear surface of the friction elements, as well as an improvement in the dissipation of the heat generated on the disc by the friction elements.

The above-mentioned advantages help create a pad for disc brakes with an improved efficiency and a longer life.

## Claims

1. A pad (1) for disc brakes for railway vehicles comprising a base plate (2), in which a plurality of fixing holes (2a) are obtained; a plurality of support plates (4), in each of which at least one fixing hole (4a) is obtained, which is designed to be engaged, together with a respective fixing hole (2a) obtained in said base plate (2), by a respective rivet (5) so as to fix the respective support plate (4) to said base plate (2); a plurality of friction elements (3), each fixed on a respective support plate (4); and a plurality of spacers (6; 11), each mounted between said base plate (2) and a respective support plate (4); in each one of said spacers (6; 11) there being obtained a locking hole (8; 13) engaged by a respective rivet (5) designed to fix the support plate (4) on the base plate (2); each one of said spacers (6; 11) comprising a central portion (7; 12), in which said locking hole (8; 13) engaged by said rivet (5) is obtained, and a plurality of support arms (9; 14) radially extending from said central portion (7; 12) and arranged in contact with a respective support plate without being fixed thereto; said pad being **characterized in that** each one of the support plates (4) is fixed to said base plate by means of two rivets (5); and between each one of the support plates (4) and the base plate (2) there are fitted two of said spacers (6; 11).

2. A pad for disc brakes according to claim 1, **characterized in that** each one of said support arms (14) has a free end (14a) arranged flush with an outer edge (4a) of a respective support plate (4) with which they in contact.

3. A pad for disc brakes according to one of the preceding claims, **characterized in that** each one of said spacers (11) has two support arms (14) radially extending from said central portion (12) and aligned with one another.

4. A pad for disc brakes according to one of the preceding claims, **characterized in that** each one of said friction elements (3) has an oblong shape having two main sides (3a) parallel to one another and with a curved shape; said friction elements (3) being fixed to said base plate (2) in such a way that the curvatures of the main sides (3a) form an angle substantially equal to 0° with respective concentric circumferences of a disc to which the pad (1) is applied; said two arms (14) being arranged substantially perpendicularly to the main sides (3a) of a respective friction element (3).

## Patentansprüche

1. Belag (1) für Scheibenbremsen für Eisenbahnfahrzeuge, aufweisend eine Basisplatte (2), in der eine Mehrzahl von Befestigungslöchern (2a) vorgesehen sind; eine Mehrzahl von Stützplatten (4), in denen jeweils mindestens ein Befestigungsloch (4a) vorgesehen ist, das dazu eingerichtet ist, zusammen mit einem in der Basisplatte (2) vorgesehenen jeweiligen Befestigungsloch (2a), durch einen jeweiligen Niet (5) erfasst zu werden, um die jeweilige Stützplatte (4) an der Basisplatte (2) zu befestigen; eine Mehrzahl von Reibelementen (3), die jeweils auf einer jeweiligen Stützplatte (4) befestigt sind; und eine Mehrzahl von Abstandshaltern (6; 11), die jeweils zwischen der Basisplatte (2) und einer jeweiligen Stützplatte (4) eingebaut sind; wobei in jedem der Abstandshalter (6; 11) ein Verriegelungsloch (8; 13) vorgesehen ist, das durch einen jeweiligen Niet (5), der dazu eingerichtet ist, die Stützplatte (4) auf der Basisplatte (2) zu befestigen, erfasst wird; wobei jeder der Abstandshalter (6; 11) einen Mittelabschnitt (7; 12), in dem das durch den Niet (5) erfasste Verriegelungsloch (8; 13) vorgesehen ist, und eine Mehrzahl von Stützarmen (9; 14), die sich vom Mittelabschnitt (7; 12) radial erstrecken und in Kontakt mit einer jeweiligen Stützplatte angeordnet sind, ohne daran befestigt zu sein, aufweist; wobei der Belag **dadurch gekennzeichnet ist, dass** jede der Stützplatten (4) an der Basisplatte mittels zwei Nieten (5) befestigt ist; und zwischen jeder der Stützplatten (4) und der Basisplatte (2) zwei der Abstandshalter (6; 11) eingepasst sind.

2. Belag für Scheibenbremsen nach Anspruch 1, **dadurch gekennzeichnet, dass** jeder der Stützarme (14) ein freies Ende (14a) aufweist, das bündig mit einer Außenkante (4a) einer jeweiligen Stützplatte (4), mit der sie in Kontakt stehen, angeordnet ist.

3. Belag für Scheibenbremsen nach einem der vorstehenden Ansprüche, **dadurch gekennzeichnet, dass** jeder der Abstandshalter (11) zwei Stützarme (14) aufweist, die sich von dem Mittelabschnitt (12) radial erstrecken und zueinander ausgerichtet sind.

4. Belag für Scheibenbremsen nach einem der vorstehenden Ansprüche, **dadurch gekennzeichnet, dass** jedes der Reibelemente (3) eine längliche Form mit zwei zueinander parallelen Hauptseiten (3a) und mit einer gekrümmten Form aufweist; wobei die Reibelemente (3) an der Basisplatte (2) derart befestigt sind, dass die Krümmungen der Hauptseiten (3a) einen Winkel von im Wesentlichen 0° mit jeweiligen konzentrischen Umfängen einer Scheibe, auf die der Belag (1) aufgebracht wird, bilden; wobei die beiden Arme (14) im Wesentlichen senkrecht zu den Hauptseiten (3a) eines jeweiligen Reibelements (3) angeordnet sind.

## Revendications

1. Plaquette (1) pour freins à disque pour véhicules ferroviaires comprenant une plaque de base (2), dans laquelle sont obtenus une pluralité de trous de fixation (2a) ; une pluralité de plaques de support (4), dans chacune desquelles est obtenu au moins un trou de fixation (4a), qui est conçu pour être mis en prise, avec un trou de fixation (2a) respectif obtenu dans ladite plaque de base (2), par un rivet (5) respectif de manière à fixer la plaque de support (4) respective à ladite plaque de base (2) ; une pluralité d'éléments de frottement (3), fixés chacun sur une plaque de support (4) respective ; et une pluralité d'entretoises (6 ; 11), montées chacune entre ladite plaque de base (2) et une plaque de support (4) respective ; dans chacune desdites entretoises (6 ; 11) est obtenu un trou de verrouillage (8 ; 13) mis en prise par un rivet (5) respectif conçu pour fixer la plaque de support (4) sur la plaque de base (2) ; chacune desdites entretoises (6 ; 11) comprenant une partie centrale (7 ; 12), dans laquelle ledit trou de verrouillage (8 ; 13) mis en prise par ledit rivet (5) est obtenu, et une pluralité de bras de support (9 ; 14) s'étendant radialement depuis ladite partie centrale (7 ; 12) et agencés en contact avec une plaque de support respective sans y être fixés ; ladite plaquette étant **caractérisée en ce que** chacune des plaques de support (4) est fixée à ladite plaque de base à l'aide de deux rivets (5) ; et entre chacune des plaques de support (4) et la plaque de base (2) sont installées deux desdites entretoises (6 ; 11).

2. Plaquette pour freins à disque selon la revendication 1, **caractérisée en ce que** chacun desdits bras de support (14) comporte une extrémité libre (14a) agencée à fleur d'un bord extérieur (4a) d'une plaque de support (4) respective avec laquelle ils sont en contact.

3. Plaquette pour freins à disque selon l'une des revendications précédentes, **caractérisée en ce que** chacune desdites entretoises (11) comporte deux bras de support (14) s'étendant radialement depuis ladite partie centrale (12) et alignés l'un sur l'autre.

4. Plaquette pour freins à disque selon l'une des revendications précédentes, **caractérisée en ce que** chacun desdits éléments de frottement (3) présente une forme oblongue ayant deux côtés principaux (3a) parallèles l'un à l'autre et ayant une forme courbée ; lesdits éléments de frottement (3) étant fixés à ladite plaque de base (2) d'une manière telle que les courbures des côtés principaux (3a) forment un angle sensiblement égal à 0° avec des circonférences concentriques respectives d'un disque auquel est appliquée la plaquette (1) ; lesdits deux bras (14) étant agencés de manière sensiblement perpendiculaire aux côtés principaux (3a) d'un élément de frottement (3) respectif.
